# EUROPEAN PATENT APPLICATION

(11) **EP 1 814 097 A2**
(43) Date of publication of application: **01.08.2007**
(21) Application number: 07250162.0
(22) Date of filing: 16.01.2007
(51) Int. Cl.: G09B 23/30

(54) **AAA model for fatigue testing**

(30) Priority: 18.01.2006 US 334680
(71) Applicant: Cordis Corporation, Miami Lakes, FL 33014 (US)
(72) Inventor: Grishaber, Randy-David Burce, Asbury, NJ 08802 (US); Olsen, Daniel, Califon, NJ 07830 (US)
(74) Representative: Belcher, Simon James

(57) **Abstract**

The present invention is directed to the fabrication of a test apparatus and the test apparatus itself. The test apparatus is designed to be a component used in a durability/fatigue testing unit. One such test apparatus made in accordance with the present invention is a life-size model of an Abdominal Aortic Aneurysm made with any rapid prototyping process that creates solid freeform parts with flexible material. A preferred rapid prototyping process used to make the AAA model in accordance with the present invention is the process known as selective laser sintering (SLS), while the preferred material used in said process is an elastomeric polymer.

## Description

The present invention relates to both a method of manufacturing a model or test apparatus and the model or test apparatus itself. The test apparatus fabricated in accordance with the present invention is designed to be a component used in a durability and fatigue testing unit, most preferably for the testing of a vascular prosthesis. More specifically, the present invention is directed to a method of making a life-size anatomically correct model of an Abdominal Aortic Aneurysm (AAA) with any suitable rapid prototyping (RP) process that creates solid freeform parts with flexible material. The preferred RP processes used in making the test apparatus of the present invention is Selective Laser Sintering (SLS). The present invention is also directed to the AAA model produced by said methods and its use as a component in a vascular durability and fatigue testing unit.

The aorta is the body's largest artery, having roughly the diameter of a garden hose, and is the blood vessel that carries oxygen-rich blood away from the heart. The aorta extends from the heart down through the chest and the abdominal region, dividing into two smaller blood vessels that provide blood to the pelvis and legs. An aortic aneurysm is an abnormal bulge that can occur anywhere along the wall of the aorta. Most aortic aneurysms, about 75%, arise in the section running through one's abdomen and are thus referred to as "abdominal aneurysms". Other aortic aneurysms, referred to as "thoracic aneurysms", occur in the section of the aorta running through one's chest.

The rupturing of an aortic aneurysm causes life-threatening internal bleeding. Of course, the larger an aneurysm is, the higher the risk of it rupturing. Approximately 15,000 people die each year in the United States of a ruptured aortic aneurysm. If detected in time, an aortic aneurysm can usually be repaired by surgery. The surgical treatment of an aneurysm typically involves the use of a replacement vessel or an artificial prosthesis following the excision of the aneurysm. In other instances, stress can be relieved in the affected vessel by implanting a supporting structure such as a stent or other intravascular device therein. Implantable devices are well known in the art and include stents, grafts, stent-grafts, catheters, embolic coils, filters and cannulas.

A major concern, however, in the use of a vascular prosthesis in treating AAA or any other problem is the fact that the device is being implanted within the aorta of the patient and is subjected to numerous physiological conditions for the remainder of it's life or the life of the patient. Accordingly, it is imperative that the fatigue and durability characteristics of the implantable device be subjected to sufficient testing for its intended use.

US-6,810,751 to Moreno et al. describes a method and apparatus for testing the vascular durability and fatigue of a vascular prosthesis that simulates physiological loading conditions. One component in said apparatus is a fluid conduit manufactured to recreate the physical properties and characteristics of a vessel intended to receive the implantable device, e.g. a stent-graft. US-6,810,751, the fluid conduit is made of a transparent silicone elastomer and in one embodiment is bifurcated to correspond with the size and shape of a human aorta. US-6,511,325 to Lalka et al. also discloses an AAA model made of silicone.

The majority of AAA models used in any sort of testing are made out of either blown glass or silicone tubing. Although able to be made to simulate the aorta to a certain degree in size and shape, such models are limiting in their construction due to their composition and method of manufacturing. That is, there is still a need to provide a method of forming an anatomically correct AAA model to be used in a fatigue and durability testing apparatus that allows the model or apparatus to be easily changed from the fabrication of one model to the next to match the desired anatomy of the patient being treated. The use of blown glass and/or silicone tubing does not afford such a luxury.

Accordingly, the present invention is directed to the fabrication of a test apparatus and the test apparatus itself. The test apparatus is designed to be a component used in a durability/fatigue testing unit. One such test apparatus made in accordance with the present invention is a life-size model of an Abdominal Aortic Aneurysm made with any rapid prototyping process that creates solid freeform parts with flexible material. A preferred rapid prototyping process used to make the AAA model in accordance with the present invention is the process known as selective laser sintering (SLS), while the preferred material used in said process is an elastomeric polymer. Another preferred rapid prototyping process used to make the AAA model in accordance with the present invention is the process known as Stereolithography (SLA).

Embodiments of the invention will now be described by way of example with reference to the accompanying drawings, in which:
Figure 1 is a photograph of the CAD model created in accordance with the present invention.
Figure 2 is a photograph of a three-dimensional, life-size AAA model manufactured in accordance with the present invention using SLS technology.

The present invention is directed to a method of manufacturing a test apparatus, as well as the test apparatus itself. Although the majority of the description will be directed to the fabrication of a life-size model of an abdominal aortic aneurysm, it will be understood that the AAA region is not the only region that may be duplicated by the method of the present invention. For example, the method of the present invention may also be used in the formation of models of other arteries, or even the heart, and used in a durability/fatigue unit to test devices to be used in connection with these regions.

Accordingly, the present invention is directed to a method of making a life-size, anatomically correct model of an Abdominal Aortic Aneurysm (AAA) with any suitable rapid prototyping (RP) process that creates solid freeform parts with flexible material; however, the artisan should appreciate that the life-sized model could be scaled if appropriate. With the use of rapid prototyping methods it is possible to fabricate a structural body based directly on geometrical data of the structural body generated by a computer-aided design (CAD) program.

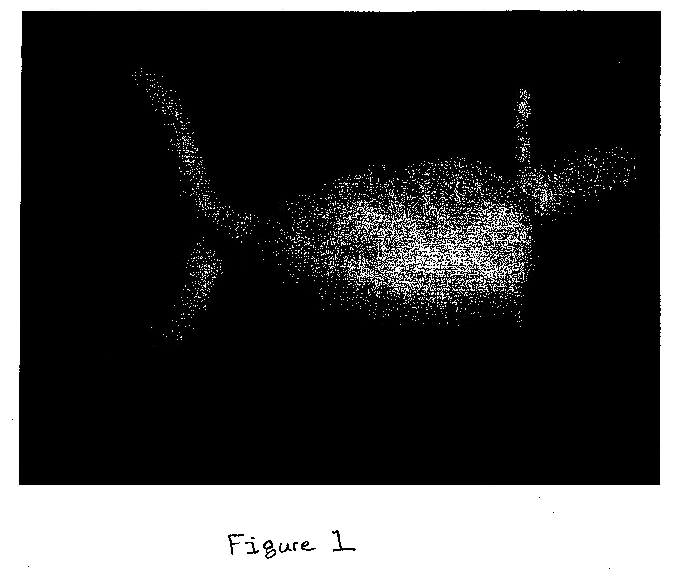

Accordingly, the first step in the manufacturing of the test apparatus in accordance with the present invention is the creation of a three-dimensional model of the AAA with a CAD program. The CAD program, based on clinical data and measurements, determine the size of the AAA CAD model. Solidworks ("SolidWorks", Concord Mass.) was the CAD program used in the making of the AAA CAD model shown in Figure 1, however, other suitable CAD software packages, such as ProEngineer (Parametric Technologies, Waltham, Mass.) are known in the art and can be used to further process the digital model.

The CAD system is essential in that it allows the test apparatus being fabricated to be changed to match the desired anatomy. For example, the three-dimensional geometry in the CAD system can be modeled to have tortuous regions or not, or anatomy size can be larger or smaller. Furthermore, geometry imported from spiral CT scans of an AAA could be used to make the model. Also, the elastic modulus of individual AAA models could potentially vary, one from the next, as desired. Basically, the present invention is building a life-size anatomically correct model of the patient's AAA.

The second step in the method of manufacturing the test apparatus in accordance with the present invention is the creation of the test apparatus through any rapid prototyping method that has the capability to create flexible models. The process of rapid prototyping, more recently referred to as a layer manufacturing (LM) process or a solid free-form fabrication (SFF) process, creates its product by building it up point-by-point or layer-by-layer. The use of a SFF process allows one to fabricate components having a complex geometry which otherwise could not be made by traditional fabrication methods.

Examples of SFF techniques include, but are not limited to, stereolithography, selective laser sintering, 3-D printing, inkjet printing, fused deposition modeling, laser powder forming and laminated object manufacturing. As indicated above, directions derived from three-dimensional CAD models drive these rapid prototyping processes. Consequently, CAD technologies are an essential enabling system for rapid prototyping. Although the various RP processes known in the art are based on different physical principles, they each essentially work by either using lasers to cut, cure or sinter material into a layer, or involve ejecting material from a nozzle to create a layer. Each method has advantages and disadvantages to be weighed and are known to those skilled in the art.

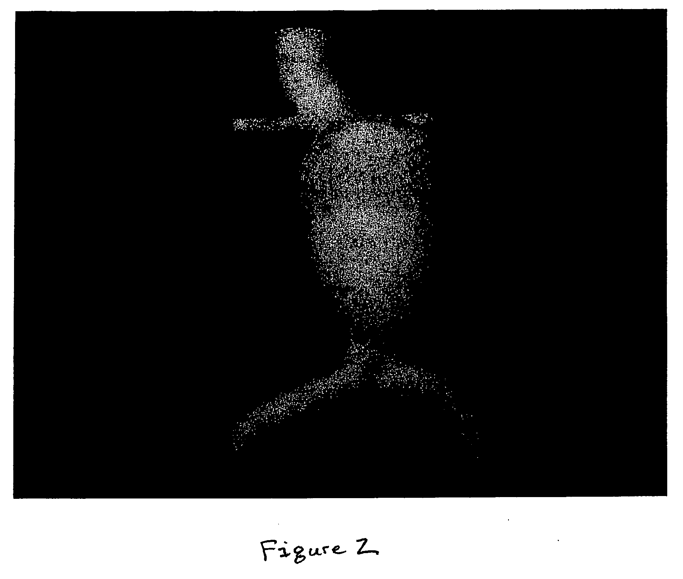

The AAA model made in accordance with the present invention as shown in Figure 2 was created with the use of Selective Laser Sintering (SLS). SLS was one RP method chosen because it offers a variety of different polymers to use and because it is very accurate when compared with other RP methods. Generally, SLS involves tracing a laser beam over the surface of a tightly compacted powder made of a thermoplastic material. A roller spreads the powder over the surface of a build cylinder. A piston moves down one object layer thickness to accommodate the layer of powder. Heat from the laser melts the powder where it strikes under guidance of a scanner system. A concentrated infrared heating beam is provided with the use of a CO₂ laser. The entire fabrication chamber is sealed and maintained at a temperature just below the melting point of the plastic powder. Accordingly, the heat from the laser need only elevate the temperature slightly to cause sintering. Following the full formation of the object, the piston is raised to elevate the object and any excess powder is brushed away. Any final manual finishing to the object can then be carried out as well.

Another variable in the manufacturing of the test apparatus in accordance with the present invention is the flexible material to be used in the RP process. The flexible material to be used in the RP process of the present invention depends on the particular RP process being employed and are generally known in the art. Many different materials can be used and include, but are not limited to, thermopolymers, photopolymers, elastomeric polymers, other plastics, metallic powder, paper and wax. The material used in the SLS method to create the AAA model shown in Figure 2 in accordance with the present invention was an elastomeric polymer sold under the trade name Somos 201. Laser sintered prototypes made with elastomer are faster and cheaper than cast prototypes. They speed up the design process by allowing for errors to be corrected early on. This material has been proven to stand up to aggressive field tests with excellent results. Other preferred materials to be used with SLS are DuraFlex (Nylon 12 Unfilled) and DuraFlex (Nylon 12 Glass Filled), while 7545-Flex (High Detail and Accuracy) and DSM-14120 (High Strength ABS Like) are materials preferred to be used with stereolithography processes.

The present invention is also directed to the AAA model produced by the rapid prototyping procedure. The use of a SFF method provides for the fabrication of models having complicated thin-walled parts. The flexible AAA model or test apparatus can in turn be used as a component in a fatigue and durability testing apparatus. For example, the flexible AAA model made in accordance with the present invention can be used as a component in a testing unit for testing the durability and fatigue of vascular prostheses, such as stents and grafts. With the use of the flexible AAA model made in accordance with the present invention in such a testing unit, the testing unit would more fully simulate the various physiological stresses induced upon the vascular prosthesis and could be made to match the specific anatomy of a particular patient.

## Claims

1. A method of manufacturing a flexible test apparatus in accordance with a rapid prototyping process, said method comprising creating a three-dimensional model of the test apparatus with a CAD program and applying said rapid prototyping process using a flexible material to said three-dimensional model to create the flexible test apparatus.

2. The method according to claim 1, wherein the test apparatus is a life-size, anatomically correct model of a specific organ or region of a mammal.

3. The method according to claim 1, wherein the test apparatus is a scaled replica of a life-sized, anatomically correct model of a specific organ or region of a mammal.

4. The method according to claim 2, wherein the life-size, anatomically correct model is an abdominal aortic aneurysm model.

5. The method according to claim 2, wherein the mammal is a human.

6. The method according to claim 1, wherein said rapid prototyping process is selected from the group consisting of stereolithography, selective laser sintering, 3-D printing, inkjet printing, fused deposition modeling and laminated object manufacturing.

7. The method according to claim 1, wherein said rapid prototyping process is selective laser sintering.

8. The method according to claim 1, wherein said flexible material is selected from the group consisting of thermopolymers, photopolymers, elastomeric polymers, metallic powder, paper and wax.

9. The method according to claim 8, wherein said flexible material is an elastomeric polymer.

10. The method according to claim 8, wherein said elastomeric polymer is Somos®201.

11. A flexible three-dimensional test apparatus manufactured by the method of claim 1.

12. The test apparatus of claim 11, wherein said test apparatus is an abdominal aortic aneurysm model.

13. A fatigue and durability testing unit comprising a flexible test apparatus manufactured in accordance with the method of claim 1.

14. The testing unit of claim 13, wherein said vascular prosthesis is selected from the group consisting of stents, grafts, stent-grafts, catheters, embolic coils, filters and cannulas.
